# EUROPEAN PATENT APPLICATION

(11) **EP 4 289 734 A1**
(43) Date of publication of application: **13.12.2023**
(21) Application number: 23177782.2
(22) Date of filing: 06.06.2023
(51) Int. Cl.: B64D 11/00, B64D 13/06, B64D 11/06, F25B 21/04, F25D 23/00, F25D 23/10

(54) **TOPOLOGY-OPTIMIZED DUCTWORK FOR NOISE MINIMIZATION IN MICRO-CHILLING SYSTEMS**

(30) Priority: 08.06.2022 US 202263350352 P; 24.01.2023 US 202318158873
(71) Applicant: B/E Aerospace, Inc., Winston-Salem, NC 27105 (US)
(72) Inventor: PEARSON, Matthew R., East Hartford, 06118 (US); KIRSCH, Kathryn L., East Hartford, 06118 (US)
(74) Representative: Dehns

(57) **Abstract**

A ducting assembly, apparatus and method of manufacture is provided. The assembly includes a housing (5), and a duct (200) inside the housing for channeling outside air from an inlet (575) of the duct to an outlet (585) of the duct to a fan of a micro-chiller unit. The duct is configured with a variable parametric three-dimensional (3D) shape to discretely reverse a flow of the outside air as the outside air is channeled inside the duct. The outside air is received, in a first direction at the inlet of the duct through a first stage of the duct that expands airflow of the outside air inside the duct and then is discretely reversed, in a second direction by the variable parametric 3D shape to flow to the outlet of the duct through a second stage that constricts the airflow of the outside air inside the duct to reduce maldistribution of air.

## Description

### CROSS-REFERENCE TO RELATED APPLICATIONS

This application claims benefit of priority under 35 U.S.C. 120 to U.S. Provisional Application Ser. No. 63/350,352 entitled "HIGH EFFICIENCY MICRO-CHILLER UNIT", filed on June 8, 2022.

### FIELD

The present disclosure generally relates to cooling enclosures within an aircraft, and more specifically to assembly, apparatus, and a method of manufacture of ducting for uniform airflow and noise reduction for a cooling system of a micro-chiller unit configured for enclosures within, for example, an in-seat passenger compartment or galley bay onboard an aircraft.

### BACKGROUND

Premium class passengers that include first class and business are generally considered the most profitable passenger segment for carriers, and therefore carriers' desire to provide the premium class passengers with the high comfort and service. This includes extending the class of service to not only commonly considered options such as passenger seating and space, but also to other services provided including providing chilled refreshments in a mini bar in the aircraft galley or in an in-seat passenger seat compartment. It has not been feasible to station compact refrigeratortype compartments in an aircraft mini-bar, galley monument, seat station or other such smaller enclosure in the aircraft interior.

### SUMMARY

In various embodiments, a duct assembly is provided. The duct assembly includes a housing; and a duct configured inside the housing for channeling outside air from an inlet of the duct to an outlet of the duct to a fan of a micro-chiller unit that is coupled to the outlet; wherein the duct is configured with a variable parametric three-dimensional shape to discretely reverse a flow of the outside air as the outside air is channeled inside of the duct; wherein the outside air is received, in a first direction at the inlet of the duct through a first stage of the duct that expands airflow of the outside air inside the duct and then is discretely reversed, in a second direction by a configured variable parametric 3D shape of the duct to flow to the outlet of the duct through a second stage that constricts the airflow of the outside air inside the duct wherein expansion and constriction of the airflow caused by the configured variable parametric 3D shape of the duct reduces maldistribution of air supplied at the outlet of the duct and ingested by the fan of the micro-chiller unit.

In various embodiments, the air supplied at the outlet of the duct with reduced maldistribution and enhanced uniformity to cause less noise when ingested by fan blades of the fan of the micro-chiller unit.

In various embodiments, the airflow of the outside air is caused to discretely reverse by changes in the variable parametric 3D shape of the duct in a plurality of angles of a range from approximately 90 degrees to 180 degrees.

In various embodiments, the configured variable parametric 3D shape, which is configured with changes to discretely reverse the outside air flow, conforms within a limited space provided by the housing.

In various embodiments, the airflow with the enhanced uniformity across a cross-sectional area of the duct has at least a low velocity in the range of up to approximately 2 m/s.

In various embodiments, the airflow with the enhanced uniformity across the cross-sectional area of the duct has at least a moderate velocity in the range of up to approximately 11 m/s.

In various embodiments, the airflow with the enhanced uniformity across the cross-sectional area of the duct has pressure difference of less than approximately 9 pascals.

In various embodiments, the airflow with the enhanced uniformity across the cross-sectional area of the duct has a velocity of a similar rate in a center region to an outer region.

In various embodiments, the variable parametric 3D shape comprises: a body shaped with a peripheral narrower part to constrict the airflow; and an indentation configured in a center part of the body to maintain uniformity in airflow through the peripheral narrower part before the air is supplied to the outlet of the duct.

In various embodiments, an apparatus is provided. The apparatus includes a housing; and a duct configured within an interior space of the housing to direct airflow of outside air from an intake of the duct to an outtake of the duct to target the airflow of outside air towards a fan of a micro-chiller unit; wherein the duct is configured to change a direction of airflow of outside air as outside air is directed inside an interior cavity of the duct; wherein airflow of the outside air is received, in a forward direction at the intake of the duct through an expansive section of the interior cavity of the duct and then the airflow of the outside air is re-directed, in another direction towards the outtake of the duct through a constrictive section of the interior cavity of the duct that results in reducing maldistribution of the airflow during re-directing of airflow of the outside air prior to the outside air being ingested by fan blades of the fan of the micro-chiller unit.

In various embodiments, the airflow of the outside air which is re-directed with reduced maldistribution causes less noise when the outside air is ingested by the fan blades during an operation of the micro-chiller unit.

In various embodiments, the re-directed airflow of the outside air in a plurality of directions comprising a range from approximately 90 degrees to 180 degrees.

In various embodiments, the duct is configured within a section of the interior space of the housing that is formed between the housing and the micro-chiller unit.

In various embodiments, the airflow with reduced maldistribution of air across a cross-sectional area of the interior cavity of the duct has at least a low velocity in the range of up to approximately 2 m/s.

In various embodiments, the airflow with the reduced maldistribution of air across the cross-sectional area of the interior cavity of the duct has at least a moderate velocity in the range of up to approximately 11 m/s.

In various embodiments, the airflow with the reduced maldistribution of air across the cross-sectional area of the interior cavity of the duct has a pressure difference of less than approximately 9 pascals.

In various embodiments, the airflow with the reduced maldistribution of air across the cross-sectional area of the interior cavity of the duct has a velocity of similar rates between center and peripheral regions of the interior cavity.

In various embodiments, the apparatus includes a shape of the duct configured to cause the re-directing of airflow of the outside air comprising: a body shaped with a peripheral narrower part to constrict the airflow; and an indentation configured in a center part of the body to reduce maldistribution of outside air in the airflow through the peripheral narrower part before the outside air is supplied ingested by the fan of the micro-chiller unit.

In various embodiments, a method of manufacture a duct in an apparatus is provided. The method includes assembling a housing with a set of components comprising at least a duct coupled to a micro-chiller unit; wherein the duct is configured within an interior space of the housing to direct airflow of outside air from an intake of the duct to an outtake of the duct to target the airflow towards a fan of the micro-chiller unit within the housing; wherein the duct is configured with a shape to cause a change of a direction of the airflow as outside air is directed inside an interior cavity of the duct; wherein the airflow of the outside air is received, in a forward direction at the intake of the duct through an expansive section of the interior cavity of the duct and then the airflow of the outside air is re-directed, in another direction towards the outtake of the duct through a constrictive section of the interior cavity of the duct that results in reducing maldistribution of the airflow during re-directing of airflow of the outside air prior to the outside air being ingested by fan blades of the fan of the micro-chiller unit.

In various embodiments, the method to manufacture the duct in an apparatus further includes configuring a shape of the duct to cause the re-directed airflow of the outside air of a body shaped with a peripheral narrower part to constrict the airflow, and an indentation in a center part of the body to reduce maldistribution of outside air in the airflow through the peripheral narrower part before the outside air is supplied ingested by the fan of the micro-chiller unit.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an example micro-chiller module that is configured with a housing that includes a micro-chiller unit and duct with a shape configured to fit in the housing of the module in accordance with various embodiments.
FIG. 2 is a diagram of the duct disposed in exterior housing of the micro-chiller unit of FIG. 1 in accordance with various embodiments.
FIGS. 3A, 3B, 3C, and 3D illustrate perspectives of the components that make up the duct assembly with the micro-chiller unit that is attached to the rear of the housing in accordance with various embodiments.
FIG. 4 illustrates a view of a diagram of an assembly that includes the micro-chiller unit, and ingress and egress airflow through the duct in a housing in accordance with various embodiments.
FIG. 5 illustrates a diagram of a side view of a set of components that includes the ductwork and the micro-chiller unit within the exterior housing of the micro-chiller module in accordance with various embodiments.
FIG. 6A illustrates a diagram of an original duct corresponding pressure contour graph at its outlet in accordance with various embodiments.
FIG. 6B illustrates a diagram of the optimized shaped duct and a graph of the flow uniformity at its outlet in accordance with various embodiments.
FIG. 7 illustrates a flow diagram for configuring an assembly of a ductwork with the micro-chiller unit of the aircraft in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

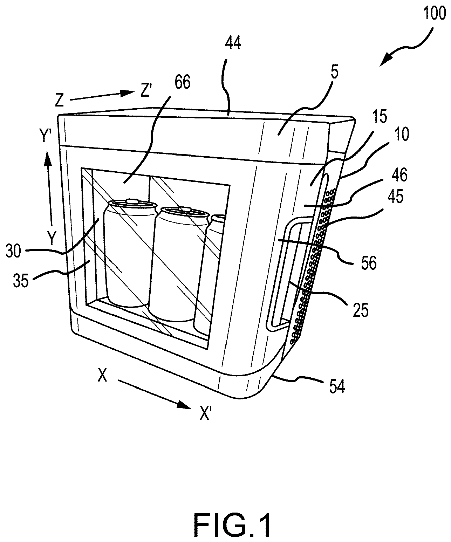

Referring to FIG. 1, FIG. 1 illustrates an example micro-chiller module 100 configured with a housing that includes a micro-chiller unit and duct with a shape configured to fit in the housing of the module in accordance with various embodiments. In various embodiments, the micro-chiller module 100 is configured to operate with outside air drawn in from the cabin through a duct disposed in its housing 5, shaped to conform to its housing 5, and to uniformly direct a fresh outside air supply to the micro-chiller unit comprising an assembly enclosed in a rear casing 10 mounted on the back of the micro-chiller module 100 of a set of components including a heat sink and (fan) blower. The shape of the duct is configured to fit inside the rear casing 10 of the housing 5 and to affect the acoustic signature of an operating unit. In various embodiments, the duct because of its atypical shape and configuration minimizes noise from disturbances in air flow as outside air is drawn by the blower during a chilling cycle. This is in part because the duct's atypical shape and design reduces if not eliminates recirculation regions of air flow during the supply of air to the heat sink and tends to maximize or nearly maximize airflow uniformity in the duct's interior cavity.

In various embodiments, the duct is configured with a topology with a curved cylindrical toroidal cavity (that may be configured to change directions) that expands and constricts the conveyance of air from an inlet configured at the duct's input to an outlet configured at the duct's output. The interior cavity exhibits a continuous fluidic change in shape to cause less pressure changes and difference across a cross-sectional area of toroidal cavity (i.e., interior cavity) in the air flow as the air proceeds through the duct and maintains uniformity in the flow.

In various embodiments, the example micro-chiller module 100 includes a micro-chiller enclosure system housed in an exterior housing 5 with an interior compartment 30 (container or interior cavity), a door 15, rear assembly 45 (with exterior venting), and a latching mechanism 25. The example micro-chiller module 100 is a standalone module configured to seamlessly integrate into a monument or compartment configured in a seating structure of an aircraft.

In various embodiments, the internal volume of the enclosed space of the compartment 30 is configured in dimensions of approximately or in the range of 8 inches (20.3 cm) in height, 9 inches (22.86 cm) in width and 3.00 (7.62 cm) inches depth. In various embodiments, the compartment 30 (interior space) of the micro-chiller unit in the exterior housing 5 can store about 3 12-fluid-ounces (355-millimeter) cans of beverages (ex., soda can about 2.6 inches (6.6 cm) in diameter and 4.83 inches (12.3 cm) in height). It is contemplated, that the exterior housing 5 can be configured in a variety of sizes and shapes configured to fit within particular aircraft monuments.

In various embodiments, the compartment 30 (and food contents therein) may be maintained with a storage temperature in a range of 38° F (3.333 degree Celsius) to 48° F (8.889 degree Celsius) +/-2° F degrees (e.g., in a vicinity of 39.2° F /4° C).

In various embodiments, the micro-chiller module 100 is configured for power with power systems in the seating structure of the aircraft. For example, this may include readily accessible low voltage DC power supplied and AC power supplied that is generally installed for mobile devices charging and on-screen monitors integrated in the seating structure. The micro-chiller module 100 may also be equipped with an internal AC/DC converter, or a DC/DC regulator to receive power from a 120 volts (60 hertz) AC current or a 12/24 volts from a battery pack.

In various embodiments, the micro-chiller module 100 includes a compartment 30 configured as a container (e.g., aluminum chill-pan) comprising a conductive material like aluminum that generally composed of five sides (e.g., a top side 44 (Y'-Z', Y'-X'), a bottom side 54 (Y-Z', X-X'), a left side 66 (Y-Y', Z-Z'), a right side 56 (X'-Z', Y-Y'), a back side 46 (Z'-X', Y'-Z').

In various embodiments, the micro-chiller module 100 is a configuration of a micro-chiller unit that can comprise a set of thermo-electric elements (e.g., Peltier elements) with a heat sink mounted on a radially concentric set of fins for heat dissipation with a blower mounted onto the top of the compartment. In implementation, the top wall of the compartment 30 is encapsulated by an aluminum plate of approximately 1 to 2 mm thick. The micro-chiller module 100 in operation enables a cooling of the aluminum plate (via one or more Peltier modules), which in turn cools the interior compartment 30. To provide increased cooling and power performance, the aluminum sheet may be extended and folded down over additional sides of the compartment and if a cosmetic face sheet is used, the cosmetic face sheet is bonded or riveted or otherwise coupled to the aluminum with, for example, an adhesive such as a thermal epoxy. The aluminum plate forms a barrier that prevents or at least lessens (intercepts) the heat entering the cooling compartment before it mixes with the internally distributed air flow or is expelled to the exterior by the channeled distributed air.

In various embodiments, the assembly of the micro-chiller module 100 is configured with multiple layers, a distributed channel of cooled air across each side, providing a compact, lownoise, modular, extensible architecture for chilling small spaces in an aircraft monument. In various embodiments, the micro-chiller module 100 is a solid-state unit configured with no moving parts (common in a refrigeration unit) on either the beverage, food, or user (passenger) facing side of the system because the chilling operation is performed by cooling of the aluminum plate. In various embodiments, the only moving part of the assembly that makes up the micro-chiller module 100 is a blower/fan, which is placed behind the monument (container) structure of the exterior housing 5 (disposed in the rear casing 10) and is out of view, and not accessible.

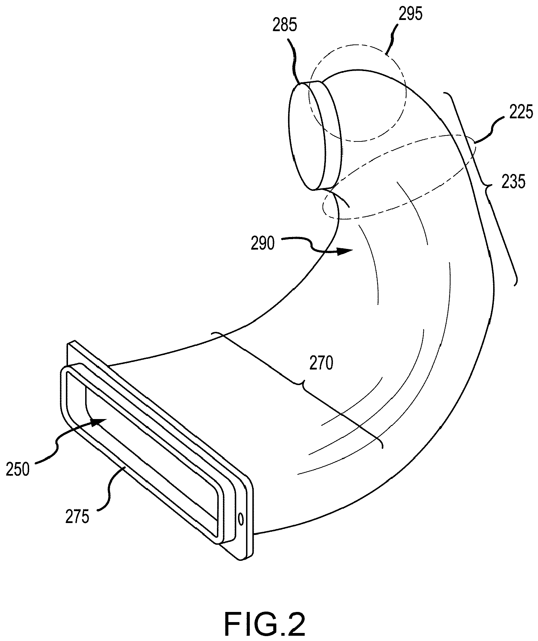

FIG. 2 is a diagram of the duct disposed in exterior housing of the micro-chiller unit of FIG. 1 under various embodiments. In FIG. 2, the duct 200 is configured with an atypical or irregular shaped (i.e., a variable parametric three-dimensional shape) with a tapered or funnel type shape (with an interior cavity smoothly transforming from an elliptical cross-sectional area to a circular cross-sectional area) that enables it to be joined or mated to a vent of the exterior housing at its proximate end with a wide flange face 275 (i.e., a wider lip) for the outside air intake. The duct's wider face is configured with a wider and flatter cross-sectional area 270 (i.e., wider elliptical cross section area that can be configured with a greater width constrained to the width dimensions of the housing and a narrower height) to draw in the outside air uniformly. The duct 200 is then gradually changed in shape (resulting in changes in the ducting topology) or tapered to a circular cross-sectional area 225 at the flange receptable 285 to target, funnel or direct the airflow to the micro-chiller unit. In various embodiments, an indentation 290 is configured in an interior side (in a center region) of the duct 200 to assist in the upward direction for the uniform distribution of airflow towards the center portion of the duct cavity. Also, a slight hump 295 is configured on the exterior side of the duct 200 to direct the direction of the airflow as it is angled or directed towards (or changed in direction) the flange receptable 285 towards the micro-chiller unit to maintain the airflow towards the center cavity of the duct 200 during the angling process flow.

In various embodiments, the duct's topology or changes in interior space is transformed (discretely changed) by a continuous deformation to configure a variable parametric three-dimensional shape of the duct structure that comprises at the onset of input air flow to have an internal passage which is broader cross-sectional area 270 with a wide elliptical opening to receive the outside air, and then to pass it through a body designed to constrict and funnel the air flow by being configured (at narrowing section 235) to constrain the airflow through an internal passage with a narrower circular cross-sectional area 225. The result is pipeline of the internal cavity of the duct that twists and turns the air through from the lower inlet of the duct 200 using gradual turns to change directions (to discretely reverse or turn around the airflow direction) of the airflow. In various embodiments, the gradual turns of the air flow for turning or discretely reversing the airflow efficiently can cause changes of the air flow in a range of approximately 90°degrees to approximately 180° degrees (+/-10%).

In various embodiments, the duct 200 is configured in a variable parametric 3D shape with a peripherally shaped part and a center (central region) with a moderate indentation. The irregular toroidal cylindrical interior cavity of the duct 200 changes (i.e., the duct's configured variable parametric 3D shape) as the outside air is conveyed through it, and its shape change causes a continuous shaping and re-directing of the airflow providing for an efficient turning (i.e., of changing of airflow directions) of the airflow at both a low flow velocity (in a range up to 1.4 m/s) and at a moderate flow velocity (up to 11 m/s) in the confined space of the interior cavity of the duct 200. In various embodiments, the duct 200 can be configured in multiple stages that can expand, turn around, and constrict the air flow as it traverses through the duct 200 passages.

In various embodiments, the body of the duct 200 which enables connecting its lower inlet to its upper outlet by its atypical shape can also be made to fit in the limited available between the exterior housing and internal components of the chilling assembly. The airflow targeted by the change in shape of the duct to the fan (blower) has more uniformity (because of the fluidic turns of the ducting) with reduced differences in pressure of the airflow between a center region and its outer regions of a cross-sectional area of the duct's interior cavity before the outside air being streamed to the fan's intake. This stable flow can reduce noise associated with the fan when the fan's blades operate and chop through an incoming airflow as an airflow with air maldistribution can cause more noise during the fan ingestion operation.

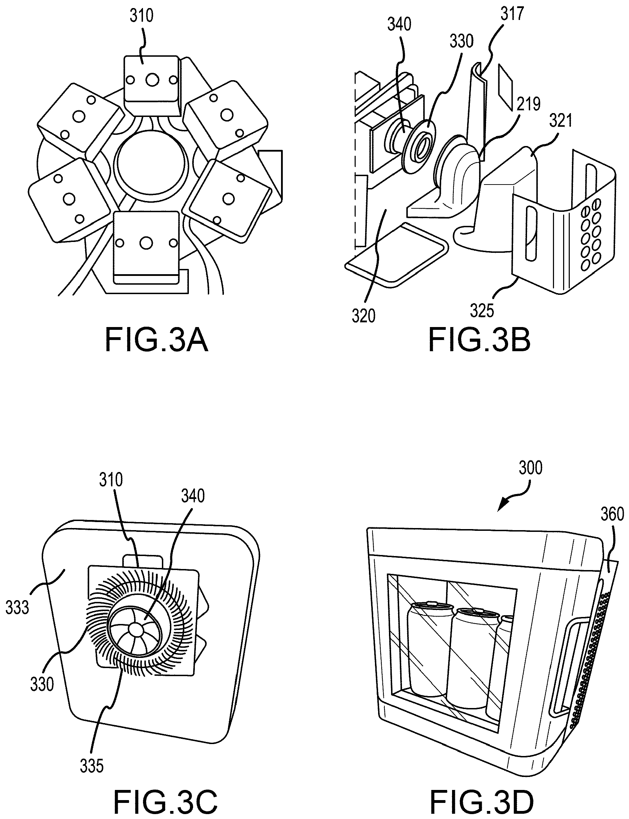

FIGS. 3A, 3B, 3C, and 3D illustrate components of the micro-chiller module under various embodiments. FIG. 3A illustrates a set of aluminum spacers 310 which can be formed with standardized machining. The spacers are generally composed of a metal alloy (e.g., aluminum and alloys thereof) in a block form with high thermal conductivity for transferring changes in temperature to the desired space, container, or chill-pan to be cooled. The spacers 310 are selected of sufficient thickness to ensure consistent thermal connection with a set of thermo-electric elements (or Peltier elements) on which the spacers 310 are mounted and are not of an excessive thickness to produce any thermal inertia. The thermo-electric elements dissipate the extracted heat to outside the housing in a forward polarity arrangement, and in a reverse polarity heat the internal cavity. The spacers 310 add a protective layer to stresses and strains that may be experienced by a container wall from the cooling (and heating) effects on which the micro-cooler unit is mounted and are applied by the thermo-electric elements of the unit when current is applied. In various embodiments, the spacers 310 conduct thermal properties such as cooling by the thermo-electric elements at the surface of a wall of the container within the housing.

FIG. 3B illustrates a diagram of a high-level view of the set of components that make up the exterior portion (i.e., non-viewable components) of the assembly of the micro-chiller module under various embodiments. The components shown of the assembly 320 are mounted on the exterior wall of the internal container and may include the radially configured heatsink 330, fan (blower) 340, support brackets 317, duct 319, duct cover 321, and an exterior venting plate 325 attached to the rear of the container.

FIG. 3C illustrates a diagram of a radially configured heatsink 330 mounted to the aluminum spacers 310 illustrated in FIG. 3A under various embodiments. The radially configured heatsink 330 is attached on the outside or hot side of the container (i.e., within the housing) with the aluminum spacers 310 and attached to one side of the container (i.e., one of the 5 sides of the interior cavity). The interior side of the container attached to the micro-chiller unit is the cold side separated by a plate 333 that conducts the thermal cooling (conductive cooling) to the interior of the compartment. Other sides of the container may include an insulative layer to protect against heat seepage.

In various embodiments, the radially configured heatsink 330 includes parallel oriented fins 335 with the fan 340 in the center. The fins 335 are circularly arranged around the fan 340 to reduce local disturbances (maldistribution of air) in cooling flow and to provide parallel air flow through the fins. The duct of the assembly in FIG. 3B is clamped or otherwise coupled to the mounting plate on which the heatsink 330 is also mounted to function as a conduit for the airflow to the heatsink 330. The fins 335 provide heat dissipation for heat transfer (away from the container) from the cooling airflow. The radially configured heatsink 330 can use a low voltage DC power source. In various embodiments, if the micro-chiller unit is configured in an in-seat housing, a power source (typically a DC power source) that is already available or connected to the aircraft seat can power the radially configured heatsink 330, and the other thermo-electric elements used. Because of the absence of refrigerant or supplied liquid coolant, the micro-chiller unit can be mounted with flexibility with any orientation including horizontally or at an angle without concern for liquid (such as refrigerant, water, or oil) circulation or interference from external refrigerator connections or condensation hoses.

FIG. 3D is a diagram of the assembly of FIGS. 3A-C configured in a rear assembly of the micro-chiller unit in accordance with various embodiments. The various components described in FIGS. 3A-C are assembled and fitted in the rear assembly 360 that may be mounted on the back of the in-seat mini bar module (attaching to the frame consisting of the assembly 300 of the front facing door connected to the exterior housing casing) in an unobstructive manner without significant protrusion to extend the depth of the unit given the limited space available in the seating module. In various embodiments, the duct 319 and duct cover 321 (of FIG. 3B) are configured to conform and fit within the interior space of the rear assembly 360 (within the venting plate 325).

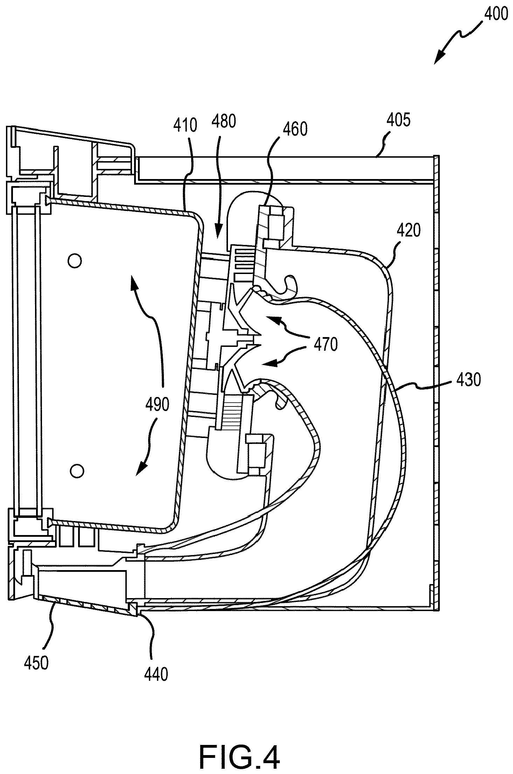

FIG. 4 illustrates an assembly of a view of the in-seat mini-bar module that includes the micro-chiller unit and ingress and egress airflow in a housing in accordance with various embodiments. In FIG. 4 there is shown the micro-chiller module 400, that includes a housing 405 that can be installed in an in-seat compartment or other aircraft monument. In various embodiments, the housing 405 includes the solid-state components for the cooling operation except for the fan unit moving parts. In various embodiments, the components are non-corrosive used in the cooling operation and can withstand vibrations and shaking experienced during aircraft operations.

In various embodiments, the previously described components of the assembly within the housing of the interior container (multi-sided container) that forms a cavity for cooling with an insulative layer configured on each side that prevent thermal seepage of exterior hotter air from the sides of the housing. In FIG. 4, there is shown the atypically shaped duct 430 that is both curved and ringed (i.e., irregular shaped duct) with a cylindrical topology in which a proximal end is wider to enable an expansive volume of outside air to be drawn in by the micro-chiller unit 480 attached to the rear wall of the interior container, and allows cool air circulated in the interior container. The micro-chiller unit expels warmer air radially rejected by the unit to the outside environment.

The curved, ringed, and/or irregular shaped duct (i.e., the duct 430) is formed in a manner to efficiently draw in the air and to prevent re-ingesting or static motion of the air flow (as opposed to a cornered rectangular pitched box 420) when drawn in by utilizing features in its configured topology that prevent air disturbances (maldistribution of air) in the airflow. The topology of the atypical duct 430 can include these features to streamline the airflow such as an indentation towards the duct's distal end and a spherical hump configured before the duct's coupling with an outlet that expunges the air into the micro-chiller unit 480. In various embodiments, via the vent 450, outside air is drawn into the unit through the irregular shaped duct (i.e., the duct 430), by a fan to the micro-chiller unit 480 configured with a radially configured heatsink that expels the hotter air (radially). The cooler air is circulated in the container using one or more thermocouple elements spaced apart by aluminum spacers that provide cooling to the container.

In various embodiments, the irregular shaped duct 430 channels the outside air into two pathways 470 in the micro-chiller unit 480. Each pathway 470 provides a channel for air distribution across a set of fins of a radially configured heatsink within the micro-chiller unit 480. Hence, the irregular shaped duct 430 routes or separates the air flow by its configuration to distribute the airflow more effectively across a cross sectional area exposed to the fins of the radially configured heatsink. This enables two paths 490 of circulation channels of air within the container 440 to uniformly cool the upper and lower parts of the container 440 with cool air of approximately or of a similar temperature gradient in the cooling operation. In various embodiments, the radially configured heatsink ingests air, generates centrally cooled air, and with a curved non-linear duct configuration enables a higher and more optimized throughput of the cool air to circulate internally in the container of the housing.

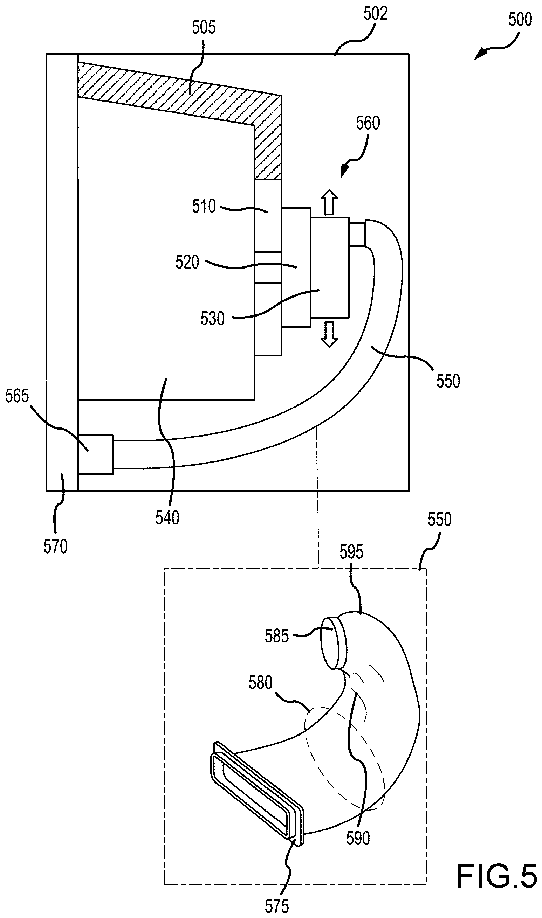

FIG. 5 illustrates a diagram of a side view of the micro-chiller module 500 that includes the ductwork and a set of components of the micro-chiller unit within the exterior housing in accordance with various embodiments. In FIG. 5, there is shown the micro-chiller module 500 that includes the micro-chiller unit 520 and a container 540 with a slight inward tilt and that makes up the interior cavity in the exterior housing 502; the tilting is to prevent liquid from opened containers (i.e., soda cans) from spilling out, such as from turbulence in flight, from the exterior housing 502 into the passenger seating area. In various embodiments, the container 540 tilting can configure an air curtain type barrier where the circulated cooler air is retained inside the container 540 by inward airflow caused by the container 540 wall angles. This can result in energy saving by keeping the cooler interior air of the container 540 from mixing with outside air when the door is opened at the frontal face 570 of the exterior housing 502.

In various embodiments, the exterior housing 502 includes the heatsink 530 that repels the hotter air, and the micro-chiller unit 520 mounted to aluminum spacers 510 for conductively cooling the interior of the container 540. In some embodiments, the curved, ringed, and irregular shaped duct (i.e., the duct 550) exhibits an irregular topology for the fluidic flow of the outside air received from the vent 565.

In various embodiments, the irregular shaped duct (i.e., the duct 550) has a tapered or funnel type shape that enables it to be joined or mated to the vent 565 of the exterior housing 502 at its proximate end with a wide flange face 575 (i.e., a wider lip) for the outside air intake. The duct's 550 wider face is configured with a wider and flatter cross-sectional area (i.e., wider elliptical cross section area that can be configured with a greater width constrained to the width dimensions of the housing and a narrower height) to draw in the outside air uniformly. The duct 550 is then gradually changed in shape (resulting in changes in the ducting topology) or tapered to a circular cross-sectional area at the flange receptable 585 to target, funnel or direct the airflow to the micro-chiller unit 520. In various embodiments, an indentation 590 is configured in an interior side of the duct to assist in the upward direction for the uniform distribution of airflow towards the center portion of the duct cavity. Also, a slight hump 595 is configured on the exterior side of the duct 550 to direct the direction of the airflow as it is angled towards the flange receptable 585 towards the micro-chiller unit 520 to attempt to maintain the airflow towards the center cavity of the duct 550 during the angling process flow.

In various embodiments, via the vent 565, outside air is drawn into the unit through the irregular shaped duct (i.e., the duct 550), by the blower unit to the micro-chiller unit 520 configured with a radially configured heatsink that expels the hotter air (radially 560). The cooler air is circulated in the container 540 using one or more thermo-couple elements spaced apart by aluminum spacers 510 that provide cooling to the container 540. The insulative layer 505 provides a barrier to heat seepage from outside warmer air and from any warmer air radially repelled by the micro-chiller unit 520.

In various embodiments, the atypically configured duct (i.e., the duct 550) is fitted within the exterior housing 502 of the micro-chiller module 500. The vents at the exterior of the exterior housing 502 enable hotter air to be dissipated from the unit radially expelled 560 by the heatsink 530. In embodiments, the dimensions of the micro-chiller module 500 are approximately 10.75 inches (27.3 cm) height, 13.25 inches (33.65 cm) width, and 12.5 inches (31.75 cm) in depth. The module is approximately 12.1 lbs. (5.5 kgs) with 10% of the weight constituting the micro-chiller unit 520. The pull-down time is approximately 31 minutes for 4 degrees Celsius (39.2 degrees Fahrenheit) with an appropriate power level beneficial to maintain the chilled temperature of approximately 21.8 watts and an outlet air temperature less than 30 degrees Celsius (86 degrees Fahrenheit).

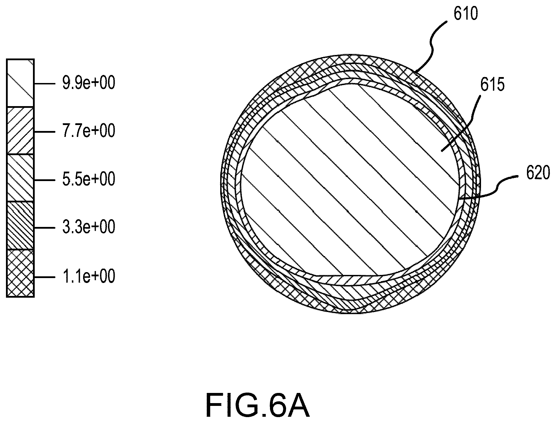

FIG. 6A illustrates a diagram of an original duct corresponding pressure contour graph at outlet in accordance with various embodiments. In FIG. 6A, for the original duct with an intake volume of air of .05 kg/s, the graph 610 displays a flow analysis (i.e., a baseline flow) with higher velocity towards the center region at 615 in the range of 9.9e+ indicating a concentration of higher air flow towards the center, and lower velocity toward the outside region 620 indicating slower air flow at the circumference of the channel at the outlet. The velocity profile at the outlet 625 of the duct 605 is not uniform and the area weight uniformity index of vertical "y" air flow velocity is calculated at approximately .8 with a differential pressure (DP) of airflow of approximately 36 DP.

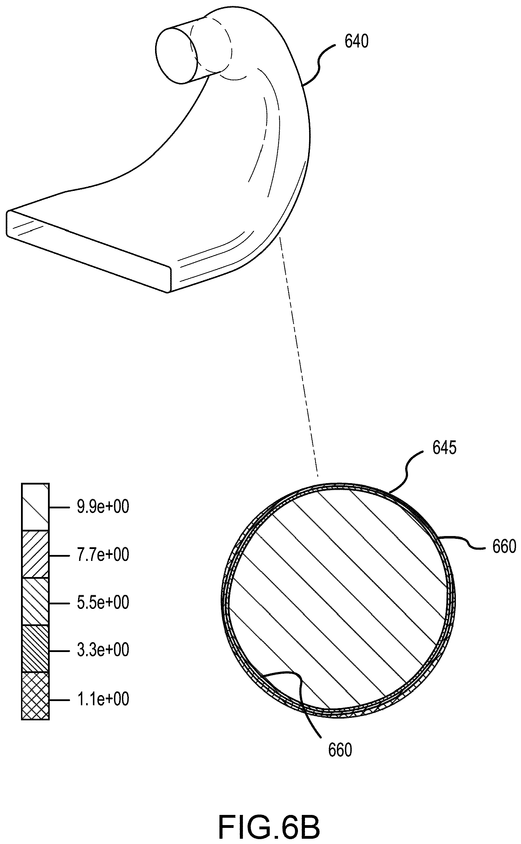

FIG. 6B illustrates a diagram of the optimized shaped duct 640 and a graph 645 of the flow uniformity at the outlet in accordance with various embodiments. In FIG. 6B, the optimized duct 640 (i.e., the atypically shaped duct with the fluidic contour) is shown to have more uniformity in the airflow at the outlet, with a high air flow concentration across the channel of its outlet that directs air towards the fan of the micro-chiller unit. The pressure difference at its outlet is approximately 9 pascals (much less than the differential pressure of 36 pascals calculated at the outlet for the duct 605 in FIG. 6A) and the area-weight uniformity index of the vertical velocity (i.e., "y" velocity) is approximately .96. Hence, the change in topology and shape of the duct 640 increases the area-weight uniformity index of vertical velocity substantial from .8 to .96 (a difference of .16) and reduces the differential pressure difference of the flow across the interior (cross-sectional area 660) of its outlet from 36 Pa to 9 Pa or approximately by 27 Pa. The uniformity in airflow, which is shown by a measured increase of about 75% in flow uniformity (e.g., 100-(9/36*100) =75%) that significantly reduces fan noise caused by fan blades having to chop through incoming air maldistributions.

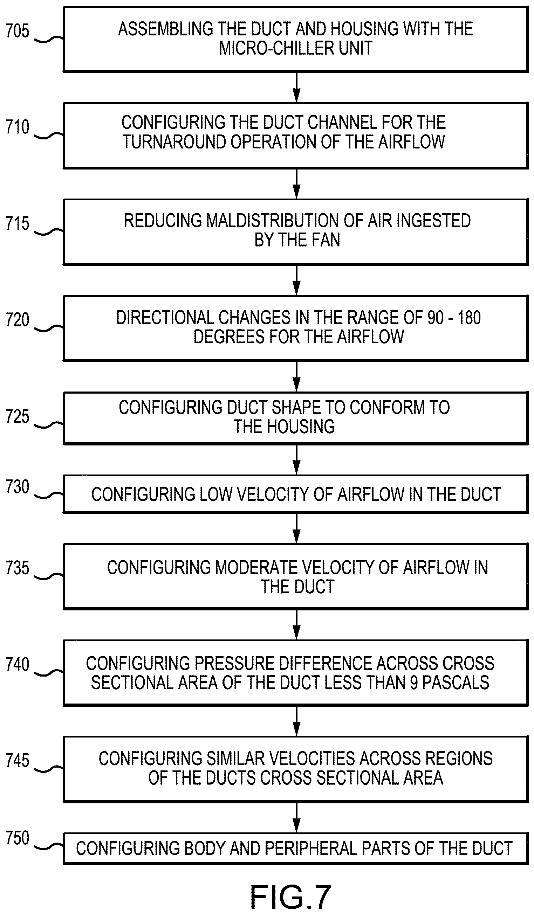

FIG. 7 illustrates a flow diagram 700 for configuring an assembly of a ductwork with the micro-chiller unit of the aircraft in accordance with various embodiments. In FIG. 7, at step 705, an assembly is put together of a housing and a duct configured inside the housing for channeling outside air from an inlet of the duct to an outlet of the duct to a fan of a micro-chiller unit coupled to the outlet. The duct is configured with a duct shape to turn around a flow of the outside air as the outside air is channeled inside of the duct. In various embodiments, the outside air is received in one direction through an initial part of the duct and then turned around in a different direction toward a fan of a micro-chiller unit. At step 710, configuring the duct channel for the turnaround operation of the airflow, the outside air is expanded and then constrained or constricted in a fluidic way to efficient change the airflow direction and to reduce maldistribution of the air during this directional change.

In various embodiments, at step 715, noise caused by the fan ingesting the air, and its blades having to chop through maldistributed air is reduced. At step 720, the airflow of the outside air is caused to turn around by changes in shapes of the duct in a plurality of angles of a range from approximately 90 degrees to 180 degrees. At step 725, the duct shape configured with shape changes to turn around the outside air flow, is assembled to fit in or to conform within a limited space provided by the housing. At step 730, the airflow with the enhanced uniformity across a cross-sectional area of the duct has at least a low velocity in the range of up to approximately 2 m/s. At step 735, the airflow with the enhanced uniformity across the cross-sectional area of the duct has at least a moderate velocity in the range of up to approximately 11 m/s. At step 740, the airflow with the enhanced uniformity across the cross-sectional area of the duct has pressure difference of less than approximately 9 pascals. At step 745. the airflow with the enhanced uniformity across the cross-sectional area of the duct has a velocity of a similar rate in a center region to an outer region. At step 750, the duct shape is configured with a body shaped with a peripheral narrower part to constrict the airflow; and an indentation configured in its center part to maintain uniformity in airflow through the peripheral narrow part before the outside air is supplied to the duct outlet.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An assembly comprising:
a housing (5); and
a duct (200) configured inside the housing for channeling outside air from an inlet of the duct to an outlet of the duct to a fan of a micro-chiller unit that is coupled to the outlet;
wherein the duct is configured with a variable parametric three-dimensional shape to discretely reverse a flow of the outside air as the outside air is channeled inside of the duct;
wherein the outside air is received, in a first direction at the inlet of the duct through a first stage of the duct that expands airflow of the outside air inside the duct and then is discretely reversed, in a second direction by a configured variable parametric 3D shape of the duct to flow to the outlet of the duct through a second stage that constricts the airflow of the outside air inside the duct wherein expansion and constriction of the airflow caused by the configured variable parametric 3D shape of the duct reduces maldistribution of air supplied at the outlet of the duct and ingested by the fan of the micro-chiller unit.

2. The assembly of claim 1, wherein the air supplied at the outlet of the duct with reduced maldistribution and enhanced uniformity to cause less noise when ingested by fan blades of the fan of the micro-chiller unit.

3. The assembly of claim 2, wherein the airflow of the outside air is caused to discretely reverse by changes in the variable parametric 3D shape of the duct in a plurality of angles of a range from approximately 90 degrees to 180 degrees.

4. The assembly of claim 3, wherein the configured variable parametric 3D shape, which is configured with changes to discretely reverse the outside air flow, conforms within a limited space provided by the housing.

5. The assembly of claim 4, wherein the airflow with the enhanced uniformity across a cross-sectional area of the duct has at least a low velocity in the range of up to approximately 2 m/s.

6. The assembly of claim 5, wherein the airflow with the enhanced uniformity across the cross-sectional area of the duct has at least a moderate velocity in the range of up to approximately 11 m/s.

7. The assembly of claim 6, wherein the airflow with the enhanced uniformity across the cross-sectional area of the duct has pressure difference of less than approximately 9 pascals.

8. The assembly of claim 7, wherein the airflow with the enhanced uniformity across the cross-sectional area of the duct has a velocity of a similar rate in a center region to an outer region.

9. The assembly of claim 8, wherein the variable parametric 3D shape comprises:
a body shaped with a peripheral narrower part to constrict the airflow; and
an indentation configured in a center part of the body to maintain uniformity in airflow through the peripheral narrower part before the air is supplied to the outlet of the duct.

10. An apparatus comprising:
a housing (5); and
a duct (200) configured within an interior space of the housing to direct airflow of outside air from an intake of the duct to an outtake of the duct to target the airflow of outside air towards a fan of a micro-chiller unit;
wherein the duct is configured to change a direction of airflow of outside air as outside air is directed inside an interior cavity of the duct;
wherein airflow of the outside air is received, in a forward direction at the intake of the duct through an expansive section of the interior cavity of the duct and then the airflow of the outside air is re-directed, in another direction towards the outtake of the duct through a constrictive section of the interior cavity of the duct that results in reducing maldistribution of the airflow during re-directing of airflow of the outside air prior to the outside air being ingested by fan blades of the fan of the micro-chiller unit.

11. The apparatus of claim 10, wherein the airflow of the outside air which is re-directed with reduced maldistribution causes less noise when the outside air is ingested by the fan blades during an operation of the micro-chiller unit.

12. The apparatus of claim 11, wherein the re-directed airflow of the outside air in a plurality of directions comprising a range from approximately 90 degrees to 180 degrees.

13. The apparatus of claim 12, wherein the duct is configured within a section of the interior space of the housing that is formed between the housing and the micro-chiller unit, and preferably wherein the airflow with reduced maldistribution of air across a cross-sectional area of the interior cavity of the duct has at least a low velocity in the range of up to approximately 2 m/s, and preferably wherein the airflow with the reduced maldistribution of air across the cross-sectional area of the interior cavity of the duct has at least a moderate velocity in the range of up to approximately 11 m/s, and more preferably wherein the airflow with the reduced maldistribution of air across the cross-sectional area of the interior cavity of the duct has a pressure difference of less than approximately 9 pascals, and preferably wherein the airflow with the reduced maldistribution of air across the cross-sectional area of the interior cavity of the duct has a velocity of similar rates between center and peripheral regions of the interior cavity, and more preferably further comprising:
a shape of the duct configured to cause the re-directing of airflow of the outside air comprising:
a body shaped with a peripheral narrower part to constrict the airflow; and
an indentation configured in a center part of the body to reduce maldistribution of outside air in the airflow through the peripheral narrower part before the outside air is supplied ingested by the fan of the micro-chiller unit.

14. A method to manufacture a duct in an apparatus comprising:
assembling a housing with a set of components comprising at least a duct coupled to a micro-chiller unit;
wherein the duct is configured within an interior space of the housing to direct airflow of outside air from an intake of the duct to an outtake of the duct to target the airflow towards a fan of the micro-chiller unit within the housing;
wherein the duct is configured with a shape to cause a change of a direction of the airflow as outside air is directed inside an interior cavity of the duct;
wherein the airflow of the outside air is received, in a forward direction at the intake of the duct through an expansive section of the interior cavity of the duct and then the airflow of the outside air is re-directed, in another direction towards the outtake of the duct through a constrictive section of the interior cavity of the duct that results in reducing maldistribution of the airflow during re-directing of airflow of the outside air prior to the outside air being ingested by fan blades of the fan of the micro-chiller unit.

15. The method to manufacture the duct in an apparatus of claim 14, further comprising:
configuring a shape of the duct to cause the re-directed airflow of the outside air of a body shaped with a peripheral narrower part to constrict the airflow, and an indentation in a center part of the body to reduce maldistribution of outside air in the airflow through the peripheral narrower part before the outside air is supplied ingested by the fan of the micro-chiller unit.
